# FASCICULE DE BREVET EUROPEEN

(11) **EP 1 933 077 B1**
(45) Date de publication et mention de la délivrance du brevet: **05.05.2010**
(21) Numéro de dépôt: 06125948.7
(22) Date de dépôt: 12.12.2006
(51) Int. Cl.: F16N 39/00, F16N 7/40, F01D 25/20, F02C 7/06, F01D 11/04

(54) **Procédé et système de lubrification d'une turbomachine**
Verfahren und System zum Schmieren von Turbomaschinen
Method and system for lubricating a turbomachine

(43) Date de publication de la demande: 18.06.2008
(73) Titulaire: Techspace Aero, 4041 Milmort - Herstal (BE)
(72) Inventeur: CORNET, Albert, B 4800, VERVIERS (BE); RAIMARCKERS, Nicolas, 4263, TOURINNE (BRAIVES) (BE)
(74) Mandataire: Boura, Olivier

(56) Documents cités:
- EP-A- 1 389 671
- EP-A1- 0 780 546
- GB-A- 2 135 740
- US-A- 5 152 141
- US-A1- 2005 211 093

## Description

### Arrière-plan de l'invention

La présente invention se rapporte au domaine général de la lubrification d'une turbomachine aéronautique.

Une turbomachine aéronautique comporte de nombreux éléments nécessitant d'être lubrifiés ; il s'agit notamment des paliers à roulement utilisés pour supporter les arbres de rotation, ainsi que les engrenages du boîtier d'entraînement d'accessoires.

Pour diminuer le frottement, l'usure et l'échauffement dus à la vitesse de rotation élevée des arbres de la turbomachine, les paliers à roulement qui les supportent ont ainsi besoin d'être lubrifiés. Comme une simple lubrification en injectant de l'huile uniquement lors des phases d'entretien de la turbomachine ne suffit pas, on a généralement recours à une lubrification dite dynamique.

Une lubrification dynamique consiste à mettre de l'huile en circulation continue dans un circuit de lubrification. Un débit d'huile de lubrification provenant d'un réservoir est ainsi envoyé par une pompe sur les roulements des paliers, ces derniers étant logés dans des enceintes fermées par des joints d'étanchéité. Pour éviter toute fuite d'huile de lubrification des enceintes vers le reste de la turbomachine au travers des joints d'étanchéité, un débit d'air qui est prélevé sur l'un des compresseurs de la turbomachine est injecté au travers de ces joints. Les enceintes se trouvent ainsi pressurisées par rapport à la pression atmosphérique.

L'essentiel de l'air introduit dans les enceintes est alors évacué vers l'extérieur de la turbomachine en empruntant un circuit spécial destiné à le déshuiler et à contrôler la pression à l'intérieur des enceintes. Quant à l'huile de lubrification injectée dans les enceintes, elle est récupérée en fond d'enceinte par des pompes de récupération via un autre circuit spécial. Pour assurer un assèchement complet de l'enceinte, une faible part d'air est également aspirée par ces pompes et le mélange air/huile ainsi récupéré doit être séparé avant de renvoyer l'huile purifiée au réservoir.

Un exemple d'un tel système de lubrification d'une turbomachine est notamment décrit dans le document EP 0,513,957. Ce système présente de nombreux inconvénients. En particulier, il nécessite d'utiliser de nombreuses pompes de récupération (une pompe par enceinte) ce qui alourdit la turbomachine. Il nécessite également de prélever une quantité non négligeable d'air sur l'un des compresseurs de la turbomachine pour pressuriser les enceintes ce qui est pénalisant en terme de consommation spécifique de la turbomachine. Enfin, il est très consommateur en huile de lubrification car l'efficacité du déshuilage est une fonction décroissante du débit d'air.

On connaît aussi du brevet US 4,525,995 un système de lubrification de l'enceinte avant d'une turbomachine dans lequel le mélange air/huile injecté dans l'enceinte s'écoule dans le boîtier d'entraînement d'accessoires, ce boîtier contenant à sa sortie une pompe de récupération et un séparateur air/huile. Ce système présente également de nombreux inconvénients. Il nécessite notamment la présence d'une pompe pour récupérer le mélange air/huile ce qui alourdit la turbomachine. En outre, ce système s'applique uniquement à l'enceinte avant de la turbomachine, rien n'étant prévu pour la lubrification des autres enceintes du moteur.

On connaît encore de US 2005/0211093 un procédé de lubrification d'une turbomachine dans lequel le séparateur air/huile est situé dans le boîtier d'entraînement d'accessoires.

### Objet et résumé de l'invention

La présente invention a donc pour but principal de pallier de tels inconvénients en proposant un procédé de lubrification simplifié, allégé et à faible consommation en huile et en air comprimé.

Ce but est atteint grâce à un procédé de lubrification d'une turbomachine comportant : au moins deux enceintes distinctes fermées à leurs extrémités par des joints d'étanchéité à faible débit d'air, comportant une sortie en partie basse et dans lesquelles sont logés des paliers à roulement de support d'arbres ; un réservoir d'huile ; une pompe d'alimentation en huile et un séparateur air/huile, le procédé consistant, conformément à l'invention, à injecter de l'huile issue du réservoir dans les enceintes au moyen de la pompe pour lubrifier les paliers à roulement, introduire un faible débit d'air comprimé dans les enceintes au travers des joints d'étanchéité pour pressuriser lesdites enceintes, récupérer l'ensemble de l'air et de l'huile introduits dans les enceintes par leur sortie en partie basse, utiliser la gravité et la pressurisation des enceintes par l'air introduit pour acheminer le mélange air/huile ainsi récupéré vers le séparateur air/huile, séparer l'air et l'huile dudit mélange au moyen du séparateur air/huile, le fonctionnement du séparateur air/huile étant contrôlé pour être déclenché uniquement en cas de présence d'huile à son entrée, renvoyer l'huile dans le réservoir, et évacuer l'air vers l'extérieur de la turbomachine.

L'utilisation de la gravité et de la pressurisation des enceintes pour récupérer l'ensemble de l'air et de l'huile injectés permet d'éviter d'avoir recours à des pompes de récupération telles que divulguées dans l'art antérieur. En outre, l'ensemble de l'air et de l'huile injectés dans les enceintes est récupéré par un unique circuit commun à l'huile et à l'air ce qui évite d'avoir recours à un circuit spécial destiné à évacuer et déshuiler l'air introduit dans les enceintes comme décrit dans l'art antérieur. Le procédé de lubrification s'en trouve donc allégé et simplifié.

Le procédé consiste en outre à contrôler le fonctionnement du séparateur air/huile pour le déclencher uniquement en cas de présence d'huile à son entrée. Le contrôle du séparateur air/huile permet ainsi d'économiser de la puissance.

Selon une autre disposition avantageuse, le procédé consiste également à contrôler le fonctionnement de la pompe d'alimentation en huile pour réguler le débit d'huile acheminé dans les enceintes en fonction de la pression et/ou de la température à l'intérieur des enceintes. A cet effet, la pompe d'alimentation en huile peut être démarrée uniquement au-dessus d'une température donnée à l'intérieur dés enceintes. Le contrôle de la pompe permet d'éviter d'alimenter en huile les enceintes alors que la récupération par gravité du mélange air/huile n'est plus assurée.

De préférence, le procédé consiste en outre à refroidir l'huile avant de l'acheminer vers les enceintes.

La présente invention a également pour objet un système de lubrification d'une turbomachine **caractérisé en ce qu**'il comporte au moins deux enceintes distinctes fermées à leurs extrémités par des joints d'étanchéité à faible débit d'air et dans lesquelles sont logés des paliers à roulement de support d'arbres, un réservoir d'huile, une pompe d'alimentation en huile pour alimenter les enceintes en huile de lubrification issue du réservoir, des moyens pour introduire un faible débit d'air comprimé dans les enceintes au travers des joints d'étanchéité pour les pressuriser, des moyens pour récupérer par gravité et sous l'effet de la pressurisation des enceintes l'ensemble de l'air et de l'huile de lubrification introduits dans les enceintes, un séparateur air/huile pour séparer l'air et l'huile du mélange, des moyens de contrôle du fonctionnement du séparateur air/huile, des moyens pour renvoyer l'huile vers le réservoir, et des moyens pour évacuer l'air vers l'extérieur de la turbomachine.

De préférence, le système de lubrification comporte en outre des moyens de contrôle du fonctionnement de la pompe d'alimentation en huile.

Selon une autre caractéristique avantageuse, le séparateur air/huile comporte une fonction de pompage pour aider à aspirer le mélange air/huile récupéré des enceintes et à renvoyer l'huile vers le réservoir.

Selon encore une autre caractéristique avantageuse, la pompe d'alimentation en huile et/ou le séparateur air/huile sont à entraînement électrique.

L'invention a également pour objet une turbomachine comportant un système de lubrification tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe longitudinale d'une turbomachine montrant l'environnement de l'invention ; et
- la figure 2 est un schéma montrant la circulation de l'huile et de l'air dans une turbomachine aéronautique à double flux selon le procédé conforme à l'invention.

### Description détaillée d'un mode de réalisation

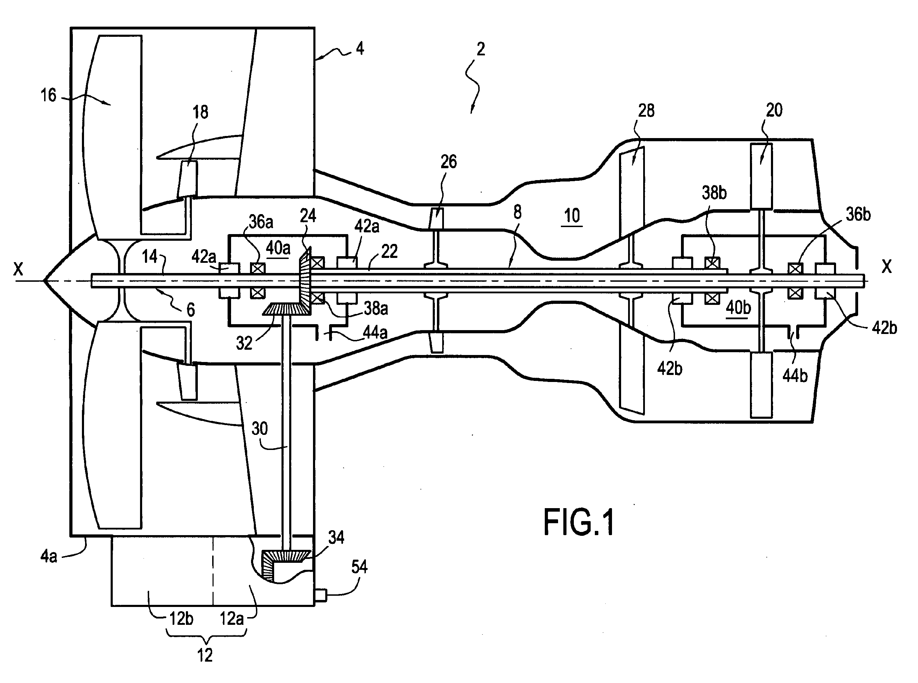

La figure 1 représente de façon schématique et partielle une turbomachine aéronautique à double flux 2 dans laquelle le procédé et le système de lubrification selon l'invention peuvent être implantés. Bien entendu, la présente invention s'applique à toute autre type de turbomachine (simple corps, triple corps, à simple flux, de type industrielle, etc.).

De façon bien connue en soi, la turbomachine 2 d'axe longitudinal X-X se compose notamment d'un carter de soufflante 4, d'un corps basse-pression 6, d'un corps haute-pression 8, d'une chambre de combustion 10 et d'un boîtier d'entraînement d'accessoires 12.

Le corps basse-pression 6 comporte un arbre basse-pression 14 centré sur l'axe longitudinal X-X, une soufflante 16 montée sur l'extrémité avant de l'arbre basse-pression, un compresseur basse-pression 18 fixé sur la soufflante en aval de celle-ci, et une turbine basse-pression 20 montée sur l'extrémité arrière de l'arbre basse-pression.

Le corps haute-pression 8 comporte un arbre haute-pression 22 disposé concentriquement autour de l'arbre basse-pression 14, un pignon conique 24 monté à l'extrémité avant de l'arbre haute-pression, un compresseur haute-pression 26 monté sur l'arbre haute-pression en aval du pignon 24 et une turbine haute-pression 28 montée sur l'extrémité arrière de l'arbre haute-pression.

Pour des raisons de clarté, les différents compresseurs et turbines des corps basse et haute pression de la turbomachine ont été représentés sur la figure 1 avec un unique étage d'aubes. Bien entendu, et de façon bien connue en soi, ces éléments peuvent porter plusieurs étages d'aubes.

Le boîtier d'entraînement d'accessoires 12 se compose d'un boîtier de renvoi d'angle 12a et du boîtier d'entraînement d'accessoires 12b proprement dit, ces boîtiers étant fixés sous le carter de soufflante 4, par exemple sur une face inférieure 4a de celui-ci. Le boîtier d'entraînement d'accessoires 12b est généralement entraîné par l'arbre haute-pression 22 via un arbre intermédiaire 30 portant un pignon conique 32 à son extrémité supérieure et un pignon conique 34 à son extrémité inférieure.

Afin de tenir aux charges radiales et axiales, les arbres basse et haute pression 14, 22 de la turbomachine sont supportés par des paliers à roulement (à billes ou à rouleaux). Ainsi, l'arbre basse-pression 14 est supporté à son extrémité avant par un palier à roulement avant 36a et à son extrémité arrière par un palier à roulement arrière 36b. De même, l'arbre haute-pression 22 est supporté à son extrémité avant par un palier à roulement avant 38a et à son extrémité arrière par un palier à roulement arrière 38b.

Pour diminuer le frottement, l'usure et l'échauffement qui sont notamment dus à la vitesse de rotation élevée des arbres de la turbomachine, les paliers à roulement avant 36a, 38a et arrière 36b, 38b ont besoin d'être lubrifiés en injectant de l'huile en continu entre les bagues des roulements de ces paliers par l'intermédiaire de buses d'injection (non représentées sur les figures).

Afin d'éviter que de l'huile de lubrification ainsi injectée ne s'échappe dans la turbomachine, les paliers à roulement avant 36a, 38b et les paliers à roulement arrière 36b, 38b sont confinés respectivement dans une enceinte avant 40a et une enceinte arrière 40b. Ces enceintes 40a, 40b sont distinctes l'une de l'autre et sont hermétiquement fermées à leurs extrémités amont et aval par des joints d'étanchéité annulaires 42a, 42b.

Les joints d'étanchéité 42a, 42b sont des joints étanches à faible débit d'air. Il s'agit par exemple de joints dynamiques sur coussin d'air (également appelés joints carbone à portance). On se référera par exemple à la demande de brevet EP 1,055,848 qui décrit de tels joints. Ce type de joint particulièrement résistant aux fuites même en cas de faible pressurisation des enceintes se compose essentiellement d'un joint à labyrinthe et d'un anneau statique de segments de carbone associé à une surface tournante avec des rainures pour créer une portance.

Chaque enceinte 40a, 40b comporte en partie inférieure (ou basse), une sortie 44a, 44b spécifique permettant de récupérer le mélange air/huile injecté dans l'enceinte selon un mode opératoire décrit ultérieurement.

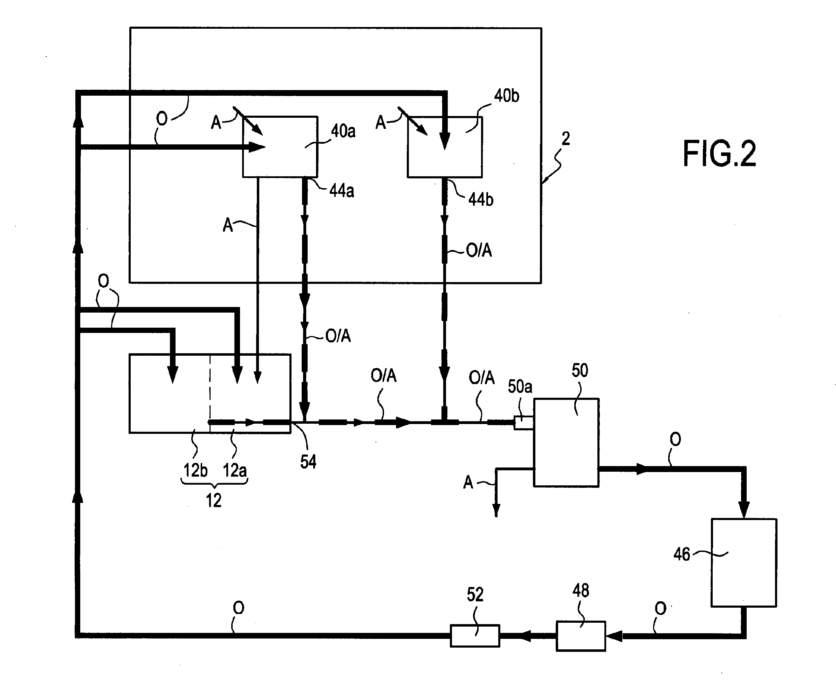

On décrira maintenant le procédé de lubrification d'une telle turbomachine selon l'invention en liaison notamment avec la figure 2 qui illustre de façon très schématique la circulation de l'huile et de l'air dans la turbomachine décrite en liaison avec la figure 1.

Sur cette figure 2, les lignes O représentent une circulation d'huile de lubrification, les lignes A une circulation d'air et les lignes O/A une circulation d'un mélange air/huile.

Toujours sur la figure 2, ont été représentés en plus de certains éléments de la figure 1, un réservoir d'huile de lubrification 46, une pompe d'alimentation en huile 48 (par exemple du type à entraînement électrique), un séparateur air/huile 50 (par exemple du type à entraînement électrique) et un dispositif de refroidissement d'huile 52. De façon connue en soi, ces éléments sont généralement fixés sous le turboréacteur, par exemple contre le boîtier d'entraînement des accessoires 12. Pour des raisons de clarté de la figure 2, ces éléments 46 à 52, le boîtier d'entraînement des accessoires 12 et la turbomachine ont cependant été représentés éloignés les uns des autres.

Le procédé selon l'invention consiste notamment à injecter de l'huile O issue du réservoir 46 dans chacune des enceintes 40a, 40b de la turbomachine au moyen de la pompe d'alimentation 48, l'huile étant destinée à lubrifier les paliers à roulement.

Un débit d'air comprimé A est également introduit dans les enceintes 40a, 40b au travers des joints d'étanchéité pour pressuriser ces enceintes (ce débit d'air provient par exemple d'un prélèvement sur le compresseur haute-pression de la turbomachine). Comme les enceintes sont fermées par des joints d'étanchéité à faible débit d'air, il suffit d'introduire un faible débit d'air dans les enceintes pour les pressuriser.

La totalité de l'air et de l'huile ainsi introduits dans les enceintes 40a, 40b est alors récupérée par leur sortie 44a, 44b en partie basse. Le mélange air/huile O/A est acheminé par simple gravité et sous l'effet de la pressurisation des enceintes vers le séparateur air/huile 50 situé en contrebas des enceintes.

Pratiquement, le mélange air/huile O/A récupéré de l'enceinte avant 40a peut être acheminé vers le séparateur air/huile en s'écoulant dans une canalisation d'évacuation (non représentée sur les figures) qui est disposée parallèlement à l'arbre intermédiaire 30 d'entraînement du boîtier d'entraînement d'accessoires 12 et qui débouche vers le séparateur.

De même, le mélange air/huile O/A récupéré de l'enceinte arrière 40b peut être acheminé vers le séparateur air/huile en s'écoulant dans une autre canalisation d'évacuation (non représentée sur les figures) qui est par exemple intégrée dans un bras de structure de la turbomachine et qui débouche vers le séparateur.

La récupération de la totalité du mélange air/huile par gravité et sous l'effet de la pressurisation des enceintes est rendue possible notamment par le fait que la pression à l'intérieur des enceintes est supérieure à celle dans le séparateur et que le séparateur est situé en contrebas des enceintes.

Le mélange air/huile O/A est introduit dans le séparateur 50 pour séparer l'huile de l'air, l'huile purifiée étant alors renvoyée vers le réservoir 46. Un dispositif de refroidissement d'huile 52 disposée en aval de la pompe 48 permet de refroidir l'huile purifiée (alternativement, le dispositif de refroidissement de l'huile pourrait être interposé entre le séparateur 50 et le réservoir 46). Quant à l'air recueilli en sortie du séparateur, il est évacué vers l'extérieur de la turbomachine.

Le séparateur air/huile 50 peut être du type dynamique, c'est-à-dire fonctionnant sur le principe de la centrifugation dynamique du mélange air/huile pour récupérer séparément l'huile et l'air. Alternativement, le séparateur air/huile pourrait être du type statique.

Le séparateur air/huile 50 peut intégrer une fonction de pompage pour aider à aspirer le mélange air/huile O/A récupéré en partie basse des enceintes et à refouler l'huile purifiée vers le réservoir. Une telle fonction peut être rendue nécessaire en cas de trop faible pressurisation des enceintes ou de hauteur inadéquate du réservoir 46 par rapport au séparateur 50.

Selon une disposition avantageuse de l'invention, il est prévu de contrôler le fonctionnement du séparateur air/huile 50 pour le déclencher uniquement en cas de présence d'huile à son entrée. A cet effet, un détecteur de présence d'huile 50a peut être monté à l'entrée du séparateur et couplé à son alimentation électrique (lorsque celui-ci est du type à entraînement électrique).

Le contrôle du séparateur air/huile peut être rendu possible du fait qu'il est électrique et donc alimenté de façon indépendante du régime de fonctionnement de la turbomachine. Grâce à un tel contrôle, il est possible de garantir une évacuation du mélange air/huile des enceintes et un retour de l'huile purifiée au réservoir quelque soit le régime de fonctionnement de la turbomachine. Le contrôle du séparateur permet également d'économiser de la puissance puisqu'il n'est pas alimenté en permanence.

Selon une autre disposition avantageuse de l'invention, il peut être également prévu de contrôler le fonctionnement de la pompe d'alimentation en huile 48 pour réguler le débit d'huile acheminé dans les enceintes en fonction de la pression et de la température à l'intérieur des enceintes. Le contrôle de la pompe permet d'éviter d'alimenter en huile les enceintes alors que la récupération par gravité du mélange air/huile n'est plus assurée.

D'une manière pratique, ce contrôle du fonctionnement de la pompe d'alimentation en huile peut être réalisé en démarrant la pompe en se basant directement sur la pression mesurée à l'intérieur des enceintes. Alternativement, la pompe peut être déclenchée uniquement au-dessus d'une température donnée à l'intérieur des enceintes (à l'aide d'appareils de mesure adéquats).

Il est à noter que le contrôle de la pompe d'alimentation en huile peut être exercé de manière alternative ou cumulative avec le contrôle du séparateur air/huile précédemment décrit.

Il est également à noter que le procédé de lubrification ainsi décrit peut également s'appliquer à la lubrification des engrenages de la boîte d'entraînement des accessoires 12.

Comme représenté à la figure 2, de l'huile de lubrification O issue du réservoir 46 est en effet injectée par l'intermédiaire de la pompe d'alimentation 48 dans le boîtier de renvoi d'angle 12a et le boîtier d'entraînement d'accessoires 12b proprement dit. En outre, un débit d'air A prélevé de l'enceinte avant 40a est acheminé vers ces boîtiers 12a, 12b pour les pressuriser. Après avoir lubrifié les engrenages des boîtiers 12a, 12b, l'huile s'écoule vers un point bas des boîtiers. Sous l'effet de la pressurisation des boîtiers, le mélange air/huile qui s'est formé est alors évacué par une sortie 54 en partie basse pour être acheminé vers l'entrée du séparateur air/huile 50 et rejoindre ainsi le circuit de lubrification de la turbomachine.

## Revendications

1. Procédé de lubrification d'une turbomachine (2) comportant :
au moins deux enceintes (40a, 40b) distinctes fermées à leurs extrémités par des joints d'étanchéité (42a, 42b) à faible débit d'air, comportant une sortie en partie basse (44a, 44b) et dans lesquelles sont logés des paliers à roulement (36a, 38a ; 36b, 38b) de support d'arbres (14, 22) ; un réservoir d'huile (46) ; une pompe d'alimentation en huile (48) et un séparateur air/huile (50), le procédé consistant à :
injecter de l'huile issue du réservoir dans les enceintes au moyen de la pompe pour lubrifier les paliers à roulement ;
introduire un faible débit d'air comprimé dans les enceintes au travers des joints d'étanchéité pour pressuriser lesdites enceintes ;
récupérer l'ensemble de l'air et de l'huile introduits dans les enceintes par leur sortie en partie basse ;
utiliser la gravité et la pressurisation des enceintes par l'air introduit pour acheminer le mélange air/huile ainsi récupéré vers le séparateur air/huile ;
séparer l'air et l'huile dudit mélange au moyen du séparateur air/huile, le fonctionnement du séparateur air/huile étant contrôlé pour être déclenché uniquement en cas de présence d'huile à son entrée ;
renvoyer l'huile dans le réservoir ; et
évacuer l'air vers l'extérieur de la turbomachine.

2. Procédé selon la revendication 1, consistant en outre à contrôler le fonctionnement de la pompe d'alimentation en huile (48) pour réguler le débit d'huile acheminé dans les enceintes (40a, 40b) en fonction de la pression et/ou de la température à l'intérieur des enceintes.

3. Procédé selon la revendication 2, dans lequel la pompe d'alimentation en huile (48) est démarrée uniquement au-dessus d'une température donnée à l'intérieur des enceintes (40a, 40b).

4. Procédé selon l'une quelconque des revendications 1 à 3, consistant en outre à refroidir l'huile avant de l'acheminer vers les enceintes (40a, 40b).

5. Système de lubrification d'une turbomachine comportant :
au moins deux enceintes (40a, 40b) distinctes fermées à leurs extrémités par des joints d'étanchéité (42a, 42b) à faible débit d'air et dans lesquelles sont logés des paliers à roulement (36a, 38a ; 36b, 38b) de support d'arbres (14, 22) ;
un réservoir d'huile (46) ;
une pompe d'alimentation en huile (48) pour alimenter les enceintes en huile de lubrification issue du réservoir ;
des moyens pour introduire un faible débit d'air comprimé dans les enceintes au travers des joints d'étanchéité pour les pressuriser ;
des moyens (44a, 44b) pour récupérer par gravité et sous l'effet de la pressurisation des enceintes l'ensemble de l'air et de l'huile de lubrification introduits dans les enceintes ;
un séparateur air/huile (50) pour séparer l'air et l'huile du mélange ;
des moyens de contrôle du fonctionnement du séparateur air/huile ;
des moyens pour renvoyer l'huile vers le réservoir ; et
des moyens pour évacuer l'air vers l'extérieur de la turbomachine.

6. Système selon la revendication 5, comportant en outre des moyens de contrôle du fonctionnement de la pompe d'alimentation en huile (48).

7. Système selon l'une des revendications 5 et 6, dans lequel le séparateur air/huile (50) comporte une fonction de pompage pour aider à aspirer le mélange air/huile récupéré des enceintes (40a, 40b) et à renvoyer l'huile vers le réservoir (46).

8. Système selon l'une quelconque des revendications 5 à 7, dans lequel la pompe d'alimentation en huile (48) et/ou le séparateur air/huile (50) sont à entraînement électrique.

9. Turbomachine **caractérisée en ce qu'**elle comporte un système de lubrification selon l'une quelconque des revendications 5 à 8.

## Claims

1. A method of lubricating a turbomachine (2) comprising:
at least two distinct enclosures (40a, 40b) closed at their ends by low air flow rate seals (42a, 42b), having low outlets (44a, 44b) and containing rolling bearings (36a, 38a; 36b, 38b) for supporting shafts (14, 22); an oil tank (46); an oil feed pump (48); and an oil/air separator (50); the method consisting in:
· injecting the oil from the tank into the enclosures by means of the pump in order to lubricate the bearings;
· introducing compressed air at a low flow rate into the enclosures through the seals in order to pressurize said enclosures;
· recuperating all of the air and the oil introduced into the enclosures via their low outlet;
· using gravity and pressurization of the enclosures by the air introduced therein to convey the oil/air mixture as recovered in this way to the oil/air separator;
· separating the oil and the air of said mixture by means of the oil/air separator, the operation of the oil/air separator being controlled so as to be triggered only when oil is present at its inlet;
· returning the oil to the tank; and
· exhausting the air to outside the turbomachine.

2. A method according to claim 1, further consisting in controlling the operation of the oil feed pump (48) to regulate the flow rate of oil conveyed to the enclosures (40a, 40b) as a function of the pressure and/or the temperature inside the enclosures.

3. A method according to claim 2, wherein the oil feed pump (48) is started only when the temperature inside the enclosures (40a, 40b) rises above a given temperature.

4. A method according to any one of claims 1 to 3, further consisting in cooling the oil prior to conveying it to the enclosures (40a, 40b).

5. A turbomachine lubrication system comprising:
· at least two distinct enclosures (40a, 40b) closed at their ends by low air flow rate seals (42a, 42b) and housing rolling bearings (36a, 38a; 36b, 38b) for supporting shafts (14, 22);
· an oil tank (46);
· an oil feed pump (48) for feeding the enclosures with lubricating oil from the tank;
· means for introducing compressed air at a low flow rate into the enclosures through the seals in order to pressurize them;
· means (44a, 44b) for recovering under gravity and under the effect of the enclosures being pressurized, all of the air and the lubricating oil introduced into the enclosures;
· an oil/air separator (50) for separating the oil and the air of the mixture;
· means for controlling the operation of the oil/air separator;
· means for returning the oil to the tank; and
·means for exhausting the air to outside the turbomachine.

6. A system according to claim 5, further including means for controlling the operation of the oil feed pump (48).

7. A system according to claim 5 or claim 6, wherein the oil/air separator (50) includes a pumping function to assist sucking the oil/air mixture recovered from the enclosures (40a, 40b) and returning the oil to the tank (46).

8. A system according to any one of claims 5 to 7, wherein the oil feed pump (48) and/or the oil/air separator (50) are electrically driven.

9. A turbomachine, **characterized in that** it includes a lubrication system according to any one of claims 5 to 8.

## Patentansprüche

1. Verfahren zum Schmieren einer Turbomaschine (2), die mindestens zwei getrennte Kammern (40a, 40b), die an ihren Enden durch Wellendichtungen (42a, 42b) mit geringem Luftdurchlaß verschlossen sind, einen Ausgang am unteren Teil (44a, 44b) umfassen und in welchen Wälzlager (36a, 38a; 36b, 38b) zur Unterstützung von Wellen (14, 22) angeordnet sind, einen Öltank (46), eine Ölzuleitungspumpe (48) und einen Luft-/Ölabscheider (50) umfaßt, wobei das Verfahren darin besteht:
Öl vom Tank in die Räume mittels der Pumpe einzuleiten, um die Wälzlager zu schmieren,
eine geringe Druckluftmenge in die Kammern durch die Wellendichtungen einzuleiten, um die Kammern unter Druck zu setzen,
die Gesamtheit der Luft und des Öls, die in die Kammern eingeleitet wurden, an deren Ausgang im unteren Teil wiederzugewinnen,
die Schwerkraft und die Unterdrucksetzung der Kammern durch die eingeleitete Luft zu verwenden, um das so wiedergewonnene Luft-/Ölgemisch zum Luft-/Ölabscheider zu leiten,
die Luft und das Öl des Gemisches mit Hilfe des Luft-/Ölabscheiders zu trennen, wobei der Betrieb des Luft-/Ölabscheiders derart gesteuert wird, daß er nur im Falle des Vorhandenseins von Öl an seinem Eingang ausgelöst wird,
das Öl wieder in den Tank zu leiten, und
die Luft aus der Turbomaschine nach außen abzuleiten.

2. Verfahren nach Anspruch 1, ferner darin bestehend, den Betrieb der Ölzuleitungspumpe (48) derart zu steuern, daß die in die Kammern (40a, 40b) geleitete Ölmenge in Abhängigkeit vom Druck und/oder der Temperatur im Inneren der Kammern reguliert wird.

3. Verfahren nach Anspruch 2, bei dem die Ölzuleitungspumpe (48) nur oberhalb einer vorgegebenen Temperatur im Inneren der Kammern (40a, 40b) eingeschaltet wird.

4. Verfahren nach einem der Ansprüche 1 bis 3, ferner darin bestehend, das Öl abzukühlen, bevor es zu den Kammern (40a, 40b) geleitet wird.

5. System zum Schmieren einer Turbomaschine, umfassend:
mindestens zwei getrennte Kammern (40a, 40b), die an ihren Enden durch Wellendichtungen (42a, 42b) mit geringem Luftdurchlass verschlossen sind und in denen sich Wälzlager (36a, 38a; 36b, 38b) zur Unterstützung von Wellen (14, 22) befinden,
einen Öltank (46),
eine Ölzuleitungspumpe (48), um die Kammern mit Schmieröl aus dem Tank zu versorgen,
Mittel, um eine geringe Druckluftmenge in die Kammern durch Wellendichtungen einzuleiten, um sie unter Druck zu setzen,
Mittel (44a, 44b), um durch Schwerkraft und unter der Wirkung der Unterdrucksetzung der Kammern die Gesamtheit der Luft und des Schmieröls, die in die Kammern eingeleitet wurde, wiederzugewinnen,
einen Luft-/Ölabscheider (50), um die Luft und das Öl des Gemisches zu trennen,
Mittel, um das Öl zum Tank zurückzuleiten, und
Mittel, um die Luft aus der Turbomaschine nach außen abzuleiten.

6. System nach Anspruch 5, ferner umfassend Mittel zur Steuerung des Betriebs der Ölzuleitungspumpe (48).

7. System nach einem der Ansprüche 5 und 6, bei dem der Luft-/Ölabscheider (50) eine Pumpfunktion aufweist, um bei der Ansaugung des Luft-/Ölgemisches, das aus den Kammern (40a, 40b) wiedergewonnen wurde, und der Rückleitung des Öls zum Tank (46) zu unterstützen.

8. System nach einem der Ansprüche 5 bis 7, bei dem die Ölzuleitungspumpe (48) und/oder der Luft-/Ölabscheider (50) elektrisch angetrieben werden.

9. Turbomaschine, **dadurch gekennzeichnet, daß** sie ein Schmiersystem nach einem der Ansprüche 5 bis 8 umfaßt.
